# EUROPÄISCHE PATENTSCHRIFT

(11) **EP 3 597 554 B1**
(45) Veröffentlichungstag und Bekanntmachung des Hinweises auf die Patenterteilung: **20.10.2021**
(21) Anmeldenummer: 18000611.6
(22) Anmeldetag: 18.07.2018
(51) Int. Cl.: B65D 19/38, B60K 1/04, B60L 53/80, B65D 19/06, B65D 19/32

(54) **TRANSPORTPALETTE, TRANSPORTBEHÄLTER SOWIE TRANSPORTFAHRZEUG MIT ZUMINDEST EINER SOLCHEN PALETTE ODER EINEM SOLCHEN BEHÄLTER**
TRANSPORT PALLET, TRANSPORT CONTAINER AND TRANSPORTATION VEHICLE WITH AT LEAST ONE SUCH PALLET OR CONTAINER
PALETTE DE TRANSPORT, RÉCIPIENT DE TRANSPORT AINSI QUE VÉHICULE DE TRANSPORT DOTÉ D'AU MOINS UNE TELLE PALETTE OU UN TEL RÉCIPIENT

(43) Veröffentlichungstag der Anmeldung: 22.01.2020
(73) Patentinhaber: Marovac, Avdu Milan, 51647 Gummersbach (DE); Smigaj Azubischule GmbH, 51588 Nümbrecht (DE)
(72) Erfinder: Marovac, Avdu Milan, 51647 Gummersbach (DE); Smigaj, Fritz, 51645 Gummersbach (DE)
(74) Vertreter: Rebbereh, Cornelia

(56) Entgegenhaltungen:
- DE-A1-102010 024 382
- DE-A1-102017 003 113
- GB-A- 2 512 406
- US-A1- 2015 273 995

## Beschreibung

Die Erfindung betrifft eine Transportpalette mit Oberseite, Unterseite und zumindest vier zwischen und/oder benachbart zu Oberseite und Unterseite angeordneten Seitenteilen oder Seitenflächen, einen Transportbehälter zum Transport von Transportgut, umfassend eine Basis und eine Anzahl von Wandungsteilen, sowie ein Transportfahrzeug mit zumindest einer elektrischen oder elektronischen Komponente, wie zumindest einem Elektroantrieb, und mit zumindest einer Transportfläche, auf der zumindest eine Transportpalette angeordnet ist.

Transportpaletten sind in unterschiedlichsten Ausführungsvarianten im Stand der Technik bekannt. Diese dienen üblicherweise dem Transport von Transportgut, die auf der Transportpalette angeordnet und auf dieser transportiert werden. Die bekannten Transportpaletten bestehen aus Holz oder Kunststoff. Zum Transport solcher Transportpaletten ist es bekannt, Transportfahrzeuge, wie Lastkraftwagen, zu verwenden, die mit zumindest einer Transportfläche versehen sind, auf der die Transportpaletten angeordnet werden. Derartige Transportfahrzeuge sind heutzutage nicht mehr nur mit herkömmlichen Verbrennungsmotorantrieben, sondern auch mit Hybridantrieben, z.B. mit einem Verbrennungsmotor und einem Elektroantrieb, und ebenfalls nur mit Elektroantrieb bekannt. Gerade bei Transportfahrzeugen, die ausschließlich durch einen Elektroantrieb angetrieben werden, ergibt sich jedoch ein Reichweitenproblem, da in Abhängigkeit von der Topographie der Landschaft und von dem zu transportierenden Transportgut und dementsprechend Lasten die Reichweite eines solchen insbesondere ausschließlich durch einen Elektroantrieb angetriebenen Transportfahrzeugs sehr begrenzt ist. Gemäß der DE 10 2011 056 921 A1 wird vorgeschlagen, einen Freiraum unterhalb einer Ladefläche eines Nutzfahrzeuganhängers zum Anordnen einer Versorgungs- und/oder Speichereinrichtung zu verwenden, die mit dem Zugfahrzeug verbunden wird, um Energie dem Aggregat des Zugfahrzeugs zuzuführen. Allerdings ist eine solche Ausgestaltung recht aufwendig. Ferner ist es erforderlich, dass ein Anhänger hinter einem Zugfahrzeug des Transportfahrzeugs mitgeführt wird, was wiederum das Gewicht erhöht und dementsprechend aufgrund der größeren Last zu einer Reichweitenreduzierung führen kann.

Weiterer relevanter Stand der Technik ist aus DE 10 2010 024 382 A1, DE 10 2017 003 113 A1 und GB 2512406 A bekannt. Insbesondere offenbart letzteres Dokument eine Transportpalette mit einem in deren Inneren angeordneten, wiederaufladbaren Energiespeicher und einer Energieübertragungseinrichtung zur Übertragung von Energie. Weiterhin offenbart GB 2512406 A ein Transportfahrzeug mit einer solchen Transportpalette.

Der vorliegenden Erfindung liegt daher die Aufgabe zugrunde, eine Transportpalette mit Oberseite, Unterseite und zumindest vier zwischen und/oder benachbart zu Oberseite und Unterseite angeordneten Seitenteilen oder Seitenflächen sowie ein Transportfahrzeug mit zumindest einem Elektroantrieb und zumindest einer Transportfläche zum Auffügen zumindest einer solchen Transportpalette vorzusehen, mittels derer die vorstehende Problematik überwunden werden kann und ggf. auch größere Lasten problemlos transportiert werden können.

Die Aufgabe wird durch eine Transportpalette nach Anspruch 1, einen Transportbehälter nach Anspruch 10 und ein Transportfahrzeug nach Anspruch 12 gelöst. Weiterbildungen der Erfindung sind in den abhängigen Ansprüchen definiert. Die Transportpalette ist mit zumindest einem wiederaufladbaren Energiespeicher versehbar oder versehen, wobei der zumindest eine wiederaufladbare Energiespeicher zur Energieversorgung zumindest einer elektrischen oder elektronischen Komponente eines Transportfahrzeugs ausgebildet ist, wobei die Transportpalette zumindest eine Energieübertragungseinrichtung zur Übertragung von Energie von dem zumindest einen wiederaufladbaren Energiespeicher an die zumindest eine elektrische oder elektronische Komponente des Transportfahrzeugs und/oder von zumindest einer Energiequelle an den wiederaufladbaren Energiespeicher aufweist. Den Transportbehälter betreffend ist als Basis zumindest eine solche Transportpalette vorgesehen, welche mit einer Anzahl von Wandungsteilen und/oder türartigen Elementen verbunden ist. Bei dem Transportfahrzeug ist eine solche Transportpalette auf einer Transportfläche angeordnet, wobei das Transportfahrzeug mit zumindest einer Anschluss- oder Verbindungseinrichtung versehen ist zum Übertragen von Energie von dem zumindest einen wiederaufladbaren Energiespeicher der Transportpalette an zumindest eine elektrische oder elektronische Komponente des Transportfahrzeugs.

Dadurch wird eine Transportpalette geschaffen, durch die es möglich ist, die Reichweite des Transportfahrzeugs, das zumindest einen Elektroantrieb umfasst, deutlich zu erhöhen, da der wiederaufladbare Energiespeicher der Transportpalette den Elektroantrieb des Transportfahrzeugs mit Energie versorgen kann. Die Transportpalette wird hierfür auf der Transportfläche des Transportfahrzeugs angeordnet und der zumindest eine wiederaufladbare Energiespeicher der Transportpalette über die zumindest eine Energieübertragungseinrichtung zur Energieübertragung mit dem Elektroantrieb des Transportfahrzeugs verbunden. Der zumindest eine wiederaufladbare Energiespeicher der Transportpalette kann jedoch nicht nur zur Energieversorgung des zumindest einen Elektroantriebs des Transportfahrzeugs und somit zur Vergrößerung der Reichweite des Transportfahrzeugs genutzt werden, sondern die von dem zumindest einen wiederaufladbaren Energiespeicher der Transportpalette zur Verfügung gestellte Energie auch zur Energieversorgung anderer elektrischer oder elektronischer Komponenten des Transportfahrzeugs genutzt werden, wie beispielsweise zum Betreiben einer Klimatisierungs- oder Kühleinrichtung des Transportfahrzeugs, die z.B. der Innenraumklimatisierung des Transportfahrzeugs dient. Durch geeignete Auswahl der Anzahl der mitgeführten Transportpaletten mit dem jeweils zumindest einen wiederaufladbaren Energiespeicher kann eine gewünschte Menge an Energie für die elektrischen oder elektronischen Komponenten, insbesondere zumindest einen Elektroantrieb, des Transportfahrzeugs zur Verfügung gestellt werden. Die Transportpaletten können mit dem zu transportierenden Transportgut beladen auf der zumindest einen Transportfläche des Transportfahrzeugs angeordnet werden und erfüllen somit ihren eigentlichen Zweck. Beispielsweise nach dem Entladen leere Transportpaletten können auf der Transportfläche des Transportfahrzeugs z.B. gestapelt mitgeführt werden und somit ebenfalls zur Energieversorgung des Transportfahrzeugs dienen. Nach dem Abladen der Transportpaletten von dem Transportfahrzeug können die Transportpaletten im beladenen und auch im entladenen Zustand an eine Energiequelle angeschlossen werden, um den zumindest einen wiederaufladbaren Energiespeicher der Transportpalette wieder aufzuladen. Ggf. kann zunächst ein Entladen des zumindest einen Energiespeichers und nachfolgend dessen Laden erfolgen. Dementsprechend kann das Transportfahrzeug stets mit Transportpaletten mit geladenen wiederaufladbaren Energiespeichern beladen werden, so dass letztere stets zur Energieversorgung des zumindest einen Elektroantriebs des Transportfahrzeugs bzw. weiterer elektrischer oder elektronischer Komponenten von diesem zur Verfügung stehen.

Gerade bei kleinen Transportfahrzeugen mit lediglich einer kleinen Transportfläche, auf der z.B. lediglich eine Transportpalette oder ein Stapel von aufeinandergestapelten Transportpaletten Platz findet, kann die Reichweite bei Verwenden der mit dem zumindest einen wiederaufladbaren Energiespeicher versehenen Transportpaletten immens vergrößert werden, da das Gewicht des Transportfahrzeugs vergleichsweise gering ist. Solche kleinen Transportfahrzeuge können dementsprechend vorteilhaft zum Ausliefern von Waren bzw. Transportgütern, die auf den Transportpaletten transportiert werden, in einem begrenzten Umkreis, insbesondere auch in ländlichen Gebieten, in denen die Versorgung mit Elektrotankstellen gering ist, ohne die Gefahr eines Liegenbleibens verwendet werden.

Der zumindest eine wiederaufladbare Energiespeicher kann weiter vorteilhaft in die Transportpalette integriert sein, insbesondere im Innern der Transportpalette zwischen deren Oberseite, Unterseite und zumindest vier Seitenteilen bzw. Seitenflächen aufgenommen sein. Zu diesem Zweck kann die Transportpalette zumindest eine Aufnahme aufweisen, in der der zumindest eine wiederaufladbare Energiespeicher aufnehmbar oder aufgenommen ist. Erfindungsgemäß ist die Transportpalette aus zumindest zwei Teilen modular aufgebaut und umfasst zumindest ein Unterteil und zumindest ein Oberteil, wobei im Innern von Oberteil und/oder Unterteil der zumindest eine wiederaufladbare Energiespeicher angeordnet wird. Oberteil und/oder Unterteil können somit zumindest teilweise als Hohlkörper ausgebildet sein.

Im Innern des zumindest einen Oberteils und/oder Unterteils können vorteilhaft noch weitere Komponenten angeordnet werden. Erfindungsgemäß ist auch zumindest eine Ladeelektronikeinheit für den zumindest einen wiederaufladbaren Energiespeicher an der oder im Inneren der Transportpalette angeordnet. J 2. Die Ladeelektronikeinheit dient dem Ermöglichen bzw. der Steuerung oder Regelung des Ladens und Entladens des zumindest einen wiederaufladbaren Energiespeichers der Transportpalette. Um lange Kabelwege zu vermeiden, ist die Ladeelektronikeinheit vorteilhaft beachbart zu dem zumindest einen wiederaufladbaren Energiespeicher angeordnet.

Weiter vorteilhaft kann die Transportpalette aus zumindest einem Kunststoffmaterial bestehen. Beispielsweise kann die Transportpalette aus zumindest einem zumindest teilweise verstärkten Kunststoffmaterial bestehen. Vor allem die besonders statisch und/oder dynamisch belasteten Bereiche der Transportpalette können aus zumindest einem verstärkten Kunststoffmaterial, wie beispielsweise einem faserverstärkten Kunststoffmaterial, ausgebildet werden, während die übrigen Bereiche der Transportpalette ggf. auch aus zumindest einem unverstärkten Kunststoffmaterial ausgebildet werden können. Grundsätzlich ist es selbstverständlich ebenfalls möglich, die Transportpalette zumindest teilweise aus zumindest einem anderen Material als einem Kunststoffmaterial herzustellen. Wird die Transportpalette aus zumindest einem Kunststoffmaterial hergestellt, kann diese vorteilhaft im Spritzgussverfahren hergestellt werden.

Die zumindest eine Energieübertragungseinrichtung zur Energieübertragung von und zu dem zumindest einen wiederaufladbaren Energiespeicher kann beispielsweise zur kabelgebundenen Energieübertragung geeignet ausgebildet sein, insbesondere in Form einer Steckbuchse zur Energieübertragung über zumindest ein darin einsteckbares oder eingestecktes Kabel. Ebenfalls ist es möglich, die zumindest eine Energieübertragungseinrichtung zur kabellosen Energieübertragung auszubilden, beispielsweise zur induktiven Energieübertragung. Durch das Ausbilden zur kabellosen Energieübertragung besteht gerade auf der Außenseite einer Transportpalette nicht das Risiko, dass Komponenten der Energieübertragungseinrichtung verschmutzt oder sogar während der Verwendung der Transportpalette zum Transport von Transportgut beispielsweise durch einen Gabelstapler beschädigt werden könnte. Gerade beim Ausbilden zur kabelgebundenen Energieübertragung über die zumindest eine Energieübertragungseinrichtung kann diese besonders vorteilhaft in Form zumindest einer Steckbuchse ausgebildet sein, die insbesondere an einer der Seitenteile oder Seitenflächen der Transportpalette angeordnet werden kann. Hierdurch kann ebenfalls eine unerwünschte Beschädigung der Energieübertragungseinrichtung vermieden werden, da eine solche Steckbuchse in das Innere der Transportpalette hineinkragend ausgebildet werden kann, somit auf der Außenseite der Transportpalette die Steckbuchse nicht oder zumindest im Wesentlichen nicht vorsteht, so dass deren Beschädigung zumindest weitestgehend verhindert werden kann. Über zumindest ein Kabel kann die Energieübertragungseinrichtung der Transportpalette entweder mit einer entsprechend ausgebildeten Anschlusseinrichtung am Transportfahrzeug, in die also ein Kabel eingesteckt werden kann, oder einer Energieübertragungseinrichtung einer benachbarten Transportpalette oder, zum Laden des zumindest einen wiederaufladbaren Energiespeichers, mit einer Energiequelle bzw. Ladestation verbunden werden. Auch bei der kabellosen Energieübertragung kann einerseits eine Verbindung mit einer entsprechenden Anschlusseinrichtung an dem Transportfahrzeug oder mit einer entsprechenden kabellosen Energieübertragungseinrichtung einer benachbarten Transportpalette oder mit einer Energiequelle bzw. Ladestation zum Laden des wiederaufladbaren Energiespeichers geschaffen werden. Auch die Kombination aus kabelgebundenen und kabellosen Energieübertragungseinrichtungen sind insbesondere an einer Transportpalette möglich. Hierdurch ist ein noch universellerer Einsatz der Transportpalette möglich, da ein Anschluss sowohl an kabelgebundene als auch an kabellose Anschlusseinrichtungen am Transportfahrzeug bzw. einer Energiequelle zum Aufladen des zumindest einen wiederaufladbaren Energiespeichers der zumindest einen Transportpalette möglich ist.

Als weiter vorteilhaft erweist es sich, zumindest einen auslesbaren Datenträger in und/oder an der Transportpalette anzuordnen, beispielsweise zumindest einen RFID-Transponder, zumindest eine SIM-Karte, die auch eine für eine Maschine-zu-Maschine-Kommunikation (M2M) geeignete, fest eingebaute oder einbaubare Datenkarte sein kann, die eine problemlose und eindeutige Kommunikation auch größerer Datenmengen ermöglicht, oder zumindest einen anderen Datenträger, zum Speichern von Daten des zumindest einen wiederaufladbaren Energiespeichers der Transportpalette und/oder von eine Ortung und Identifikation des zumindest einen wiederaufladbaren Energiespeichers und/oder der Transportpalette ermöglichenden Daten. Über einen solchen auslesbaren Datenträger ist es möglich, alle Daten, insbesondere aktuellen Daten, des zumindest einen wiederaufladbaren Energiespeichers der Transportpalette sicher und jederzeit auslesbar an dieser zu speichern. Insbesondere können das Alter des wiederaufladbaren Energiespeichers, dessen Ladezyklen etc. auf dem auslesbaren Datenträger gespeichert und insbesondere berührungslos aus diesem jederzeit ausgelesen werden. Ein solches Auslesen kann beispielsweise über das Bordsystem des Transportfahrzeugs erfolgen, jedoch auch während des Wiederaufladens des oder der wiederaufladbaren Energiespeicher(s) im Bereich einer Energiequelle bzw. Ladestation für diese. Ferner können Anzeigeeinrichtungen zum Anzeigen des jeweiligen Zustands der wiederaufladbaren Energiespeicher entweder im Bereich der Transportpalette oder auslesbar aus dieser oder entfernt von dieser beispielsweise im Transportfahrzeug vorgesehen werden. Auch eine Ortung der jeweiligen Transportpalette kann, beispielsweise über GPS oder ein anderes Ortungssystem, erfolgen, wenn die jeweiligen Koordinaten ebenfalls im auslesbaren Datenträger der Transportpalette abgelegt bzw. ständig erfasst und gespeichert werden. Hierdurch kann nicht nur eine Ortung und Identifikation des auf der Transportpalette transportierten Transportguts, sondern auch der Transportpalette selbst und ggf. auch des diese transportierenden Transportfahrzeugs für logistische Zwecke erfolgen. Ferner können ggf. ebenfalls die jeweiligen Transportgüter, die auf der Transportpalette transportiert werden, sowie weitere Daten, wie Temperaturverläufe bei deren Transport und Lagerung etc., in dem Datenträger gespeichert werden, wenn dies beispielsweise für Dokumentationszwecke etc. gewünscht wird.

Da immer dann, wenn die jeweilige Transportpalette nicht auf einem Transportfahrzeug transportiert wird, diese bzw. der zumindest eine in dieser angeordnete wiederaufladbare Energiespeicher entladen bzw. wieder geladen werden kann, ist grundsätzlich die jeweils benötigte Ladezeit bzw. Entladezeit unerheblich, da stets eine ausreichende Anzahl an Transportpaletten mit geladenen wiederaufladebaren Energiespeichern zum Beladen mit Transportgut vorgehalten werden kann. Dementsprechend ist es nicht unbedingt erforderlich, schnellaufladbare wiederaufladbare Energiespeicher in der zumindest einen Transportpalette zu verwenden. Dementsprechend können auch kostengünstigere wiederaufladbare Energiespeicher in den Transportpaletten Verwendung finden.

Um unterschiedlichste Transportgut auf der Transportpalette transportieren zu können, kann diese nicht nur als Palette, sondern zusammen mit Wandungsteilen bzw. türartigen Elementen verwendet werden und hierdurch Boxen bzw. Behälter gebildet werden. Dementsprechend weist die Transportpalette vorteilhaft zumindest eine Einrichtung zum Verbinden mit einem oder mehreren Wandungsteilen und/oder türartigen Elementen auf. Insbesondere können geschlossene und/oder mit Öffnungen versehene und/oder gitterartige Wandungsteile und/oder türartige Elemente über die zumindest eine Einrichtung zum Verbinden mit der Transportpalette verbunden werden. Beispielsweise kann eine solche Einrichtung zum Verbinden eine Nut und/oder ein Absatz auf oder an der Transportpalette, insbesondere deren Oberseite sein, mit der eine entsprechend gegengleich ausgebildete Formgebung an den Wandungsteilen bzw. türartigen Elementen ineinandergreifen und sich daran festhalten kann. Auch die einzelnen Wandungsteile bzw. türartigen Elemente können miteinander und/oder mit der Transportpalette über entsprechende Verbindungseinrichtungen, insbesondere auch gelenkig bzw. klappbar, verbunden werden. Dementsprechend können gitterboxartige Aufbauten geschaffen werden, ebenso geschlossene Behälter mit oder ohne Türen, die durch die türartigen Elemente in Verbindung mit den Wandungsteilen aufgebaut werden können. Der Transportbehälter kann als allseitig geschlossener Behälter mit der zumindest einen Transportpalette als Basis, seitlichen Wandungsteilen, wie z.B. vier Wandungsteilen und/oder türartigen Elementen, und zumindest einem Deckelteil ausgebildet werden oder als Box, bei der kein Deckelteil vorgesehen wird. Beispielsweise kann der Transportbehälter als Kühlbehälter ausgebildet werden.

Aufgrund des Anordnens des zumindest einen wiederaufladbaren Energiespeichers in der Transportpalette kann hierüber ein Kühlaggregat mit elektrischer Energie gespeist werden, so dass der Kühlbehälter während des Transports das Transportgut problemlos kühlen kann. Dementsprechend kann ein solcher Kühlbehälter insbesondere als autarkes System auf dem Transportfahrzeug transportiert werden, das die Batterie bzw. Stromversorgung des Transportfahrzeugs nicht belastet. Um eine ausreichende Energiezufuhr für den Kühlbehälter sicherzustellen, kann beispielsweise eine zusätzliche Transportpalette zur Unterstützung mitgeführt werden, um durch deren zumindest einen wiederaufladbaren Energiespeicher zusätzliche Energie zur Verfügung zu stellen. Ferner kann durch diese auch Energie für den Elektroantrieb des Transportfahrzeugs zur Verfügung gestellt werden.

Die Transportpaletten können mit unterschiedlichen Abmessungen ausgebildet werden. Hierdurch ist eine Anpassung an unterschiedlich große Transportgüter möglich. Ferner sind die Transportpaletten, insbesondere unabhängig von ihren ggf. unterschiedlichen Abmessungen, vorteilhaft stapelbar ausgebildet. Um ein Relativbewegen der aufeinander gestapelten Transportpaletten zu verhindern, können insbesondere auf der Ober- und/oder Unterseite einer jeweiligen Transportpalette Vorsprünge, Rücksprünge und/oder Rasteinrichtungen zum Arretieren von aufeinander gestapelten Transportpaletten vorgesehen werden. Ebenfalls ist es möglich, zu Transportbehältern und/oder -boxen umgestaltete bzw. ergänzte Transportpaletten aufeinander zu stapeln. Auch hier kann ein Relativbewegen der aufeinander gestapelten Transportbehälter, Transportboxen, Transportpaletten durch ein solches verhindernde Einrichtungen, wie Vorsprünge, Rücksprünge, Rasteinrichtungen insbesondere an der Ober- und/oder Unterseite einer Transportpalette und/oder der Wandungsteile und/oder türartigen Elemente und/oder Deckelteile verhindert werden. Es können insbesondere vorkragende und ein Relativbewegen von aufeinander gestapelten Transportpaletten bzw. Transportbehältern oder -boxen verhindernde Einrichtungen vorgesehen werden. Auch ineinandergreifende Oberflächen an Transportpaletten, Wandungsteilen, Deckelteilen können zum Verhindern eines Relativbewegens von Transportpaletten und/oder Transportbehältern und/oder Transportboxen gegeneinander vorgesehen werden.

Durch das Ausbilden der zumindest einen Transportpalette aus zumindest einem Kunststoffmaterial kann der darin angeordnete zumindest eine wiederaufladbare Energiespeicher nach außen gegen Witterungseinflüsse geschützt werden. Durch das Vorsehen von Dichtungen zwischen insbesondere zumindest einem Oberteil und zumindest einem Unterteil der Transportpalette kann das Innere von dieser gegen ein Eindringen von Feuchtigkeit abgedichtet werden.

Außer dem Anordnen des zumindest einen wiederaufladbaren Energiespeichers in zumindest einer Aufnahme in der Transportpalette kann ein solcher wiederaufladbarer Energiespeicher auch beim Spritzgießen der Transportpalette direkt mit integriert werden, sofern die hierbei auftretenden thermischen und mechanischen Belastungen zu keiner Beschädigung des wiederaufladbaren Energiespeichers führen. Um ein späteres einfaches Auswechseln eines ggf. gealterten und nicht mehr optimal arbeitenden bzw. sich nicht mehr optimal aufladenden wiederaufladbaren Energiespeichers zu ermöglichen, wird es jedoch bevorzugt, diesen nicht in das Material in der Transportpalette mit einzugießen, sondern insbesondere in einer darin vorgesehenen Aufnahme anzuordnen, ebenso wie die zumindest eine Ladeelektronikeinheit des zumindest einen wiederaufladbaren Energiespeichers.

Zur näheren Erläuterung der Erfindung werden im Folgenden Ausführungsbespiele von dieser näher anhand der Zeichnungen beschrieben. Diese zeigen in:
- Figur 1: eine perspektivische Draufsicht auf eine erste Ausführungsform einer erfindungsgemäßen Transportpalette,
- Figur 2: eine perspektivische Explosionsansicht der Transportpalette gemäß Figur 1,
- Figur 3: eine Längsschnittansicht durch die Transportpalette gemäß Figur 1,
- Figur 4: eine Unteransicht der Transportpalette gemäß Figur 1,
- Figur 5: eine perspektivische Ansicht eines Palettenstapels mit vier Transportpaletten gemäß Figur 1,
- Figur 6: eine perspektivische Ansicht eines Palettenstapels mit drei unterschiedlich dimensionierten aufeinandergestapelten erfindungsgemäßen Transportpaletten,
- Figur 7: eine perspektivische Ansicht einer erfindungsgemäßen Gitterbox, mit vier gitterartigen Wandungsteilen und einer Transportpalette gemäß Figur 1 als Basis,
- Figur 7a: eine Explosionsansicht der Gitterbox gemäß Figur 7,
- Figur 8: eine perspektivische Ansicht einer erfindungsgemäßen Transportbox mit vier mit schlitzförmigen Öffnungen versehenen Wandungsteilen und einer Transportpalette gemäß Figur 1 als Basis,
- Figur 8a: eine perspektivische Explosionsansicht der Transportbox gemäß Figur 8,
- Figur 9: eine perspektivische Ansicht eines erfindungsgemäßen Transportbehälters mit vier Wandungsteilen, einem Deckelteil und einer Transportpalette gemäß Figur 1 als Basis,
- Figur 9a: eine perspektivische Explosionsansicht des Transportbehälters gemäß Figur 9,
- Figur 10: eine perspektivische Ansicht eines erfindungsgemäßen Transportbehälters mit drei Wandungsteilen, zwei türartigen Elementen, einem Deckelteil und einer Transportpalette gemäß Figur 1 als Basis,
- Figur 10a: eine perspektivische Ansicht des Transportbehälters mit gemäß Figur 10 mit geöffneten türartigen Elementen,
- Figur 11: eine Seitenansicht als Prinzipskizze einer ersten Ausführungsform eines erfindungsgemäßen Transportfahrzeugs mit darauf aufgenommenem erfindungsgemäßen Transportbehälter mit erfindungsgemäßer Transportpalette,
- Figur 12: eine Seitenansicht als Prinzipskizze des Transportfahrzeugs gemäß Figur 11 mit einem Stapel von neun aufeinander gestapelten erfindungsgemäßen Transportpaletten,
- Figur 13: eine Seitenansicht als Prinzipskizze einer weiteren Ausführungsform eines Transportfahrzeugs mit auf dessen Transportfläche aufgebrachtem Stapel aus erfindungsgemäßen Transportpaletten,
- Figur 14: eine Seitenansicht als Prinzipskizze des Transportfahrzeugs gemäß Figur 13 mit zusätzlich zu dem Transportpalettenstapel auf dessen Transportfläche aufgestellten weiteren erfindungsgemäßen Transportbehältern,
- Figur 15: eine Seitenansicht als Prinzipskizze des Transportfahrzeugs gemäß Figur 13 mit in zwei Lagen auf seiner Transportfläche aufgestellten erfindungsgemäßen Transportbehältern,
- Figur 16: eine Seitenansicht als Prinzipskizze einer weiteren Ausführungsform eines Transportfahrzeugs mit Zugfahrzeug und Anhänger, wobei auf dessen Transportfläche zusätzlich zu einem Stapel aus erfindungsgemäßen Transportpaletten weitere Transportbehälter angeordnet sind,
- Figur 17: eine perspektivische Ansicht eines Palettenstapels mit gestapelten erfindungsgemäßen Transportpaletten, die jeweils zumindest eine kabellose Energieübertragungseinrichtung aufweisen, aufgestellt auf einer Ladestation zum kabellosen Laden von Energiespeichern der Transportpaletten,
- Figur 18: eine perspektivische Explosionseinsicht einer erfindungsgemäßen Transportpalette mit einer Energieübertragungseinrichtung in Form zweier Steckbuchsen, von denen die eine über ein Kabel mit einer Ladestation verbunden ist,
- Figur 18a: eine perspektivische Seitenansicht der Anordnung gemäß Figur 18,
- Figur 18b: einer weitere perspektivische Ansicht der Anordnung gemäß Figur 18,
- Figur 19: eine perspektivische Ansicht eines Palettenstapels mit vier aufeinander gestapelten Transportpaletten gemäß Figur 18, wobei die übereinander gestapelten Transportpaletten im Bereich ihrer Steckerbuchsen über Kabel miteinander verbunden sind und
- Figur 19a: ein Detailausschnitt der obersten und der darunter angeordneten Transportpalette des Stapels gemäß Figur 19 im Bereich der Steckbuchsen und der dort eingesteckten Kabel.

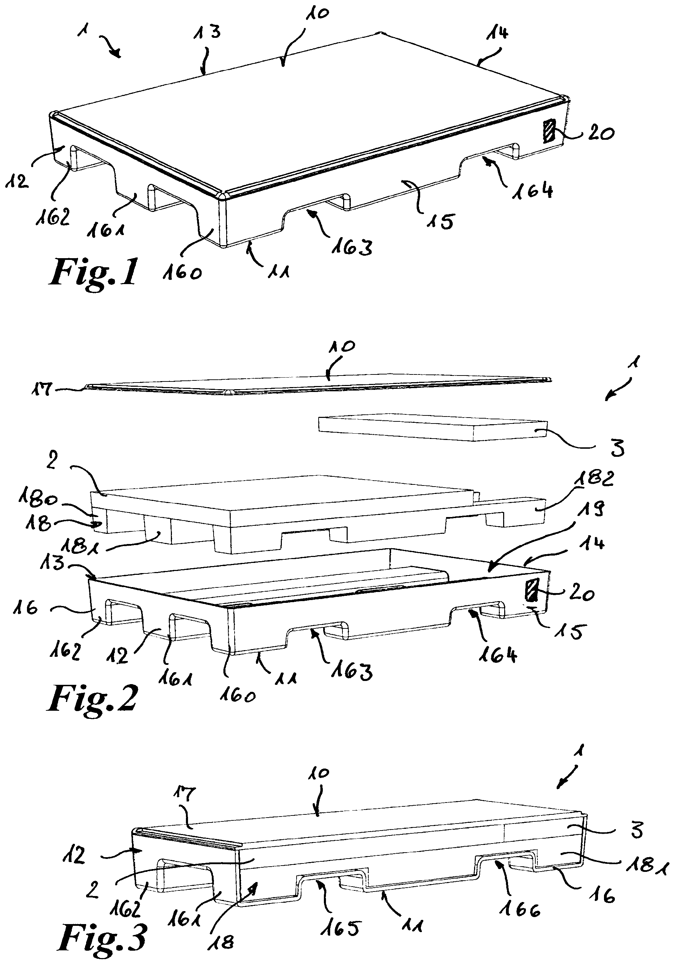

Die Figuren 1 bis 4 zeigen eine erste Ausführungsform einer Transportpalette 1, umfassend eine Oberseite 10, eine Unterseite 11 und vier zwischen bzw. benachbart zu diesen angeordnete Seitenteile 12, 13, 14, 15. Wie insbesondere der Explosionsansicht in Figur 2 zu entnehmen ist, ist die Transportpalette 1 mehrteilig bzw. modular aufgebaut und weist einen mit Hohlräumen versehenen Gehäuseunterteil 16, einen Deckelteil 17, der auf diesen aufgefügt wird, und diesen nach außen verschließt, sowie einen in das Gehäuseunterteil 16 einfügbaren Trägerteil 18 auf, der einen wiederaufladbaren Energiespeicher 2 und eine Ladeelektronikeinheit 3 trägt. Das Gehäuseunterteil 16 umfasst die Unterseite 11 der Transportpalette 1 und deren vier Seitenteile bzw. -flächen 12, 13, 14, 15. Der Deckelteil 17 weist die Oberseite 10 der Transportpalette 1 auf, wenn er auf das Gehäuseunterteil 16 aufgefügt bzw. mit diesem verbunden ist.

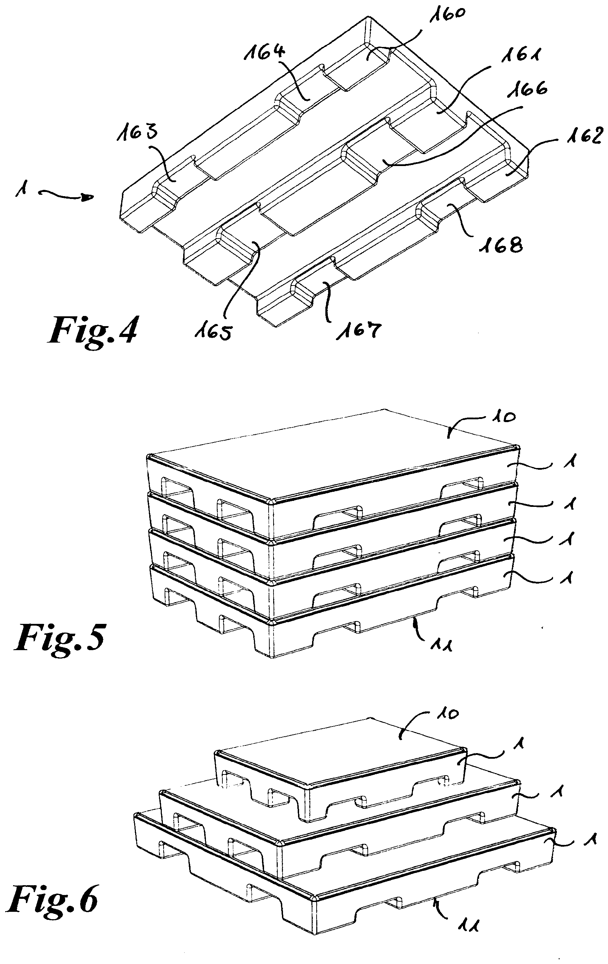

Die Ladeelektronikeinheit 3 wird mit dem wiederaufladbaren Energiespeicher 2 verbunden, wobei dies bei der in den Figuren 1 bis 4 gezeigten Ausführungsvariante der Transportpalette 1 nicht im Detail gezeigt ist. Wie Figur 2 und 3 zu entnehmen, ist die Ladeelektronikeinheit 3 direkt benachbart zu dem wiederaufladbaren Energiespeicher 2 auf dem Trägerteil 18 angeordnet und der Trägerteil 18 zusammen mit dem darauf angeordneten wiederaufladbaren Energiespeicher 2 und der Ladeelektronikeinheit 3 im inneren Hohlraum 19 des Gehäuseunterteils 16 aufgenommen und die Transportpalette 1 nach außen durch Aufbringen des Deckelteils 17 auf dem Gehäuseunterteil 16 verschlossen. Die im Innern der Transportpalette 1 angeordneten Komponenten des Energiespeichers 2 und der Ladeelektronikeinheit 3 können hierbei nach außen abgedichtet und gekapselt werden. Insbesondere bestehen der Gehäuseunterteil 16, der Deckelteil 17 sowie ggf. der Trägerteil 18 im Innern der Transportpalette 1 aus zumindest einem Kunststoffmaterial. Zumindest die Bereiche der Transportpalette, die statisch und/oder dynamisch belastet werden, können aus einem verstärkten Kunststoffmaterial, beispielsweise faserverstärkten Kunststoffmaterial, ausgebildet werden. Die Formgebung des Gehäuseunterteils 16 der Transportpalette 1 ist zum Eingreifen von Gabeln eines Gabelstaplers geeignet geformt. Es weist Längsrippen 160, 161, 162 auf, die in Querrichtung der Transportpalette, also etwa 90 ° zu der Längsstreckung der Längsrippen 160, 161, 162 angeordnete Quernuten 163, 164, 165, 166, 167, 168 aufweisen. Die Längsrippen 160, 161, 162 sind insbesondere in der Unteransicht der Transportpalette in Figur 4 besonders gut zu sehen. Der Trägerteil 18 umfasst in der in Figur 2 gezeigten Ausführungsform drei Trägerholme 180, 181, 182, auf denen der wiederaufladbare Energiespeicher 2 und die Ladeelektronikeinheit 3 angeordnet sind und die in die inneren Hohlräume der Längsrippen 160, 161, 162 des Gehäuseunterteils 16 eingefügt werden und somit diese verstärken.

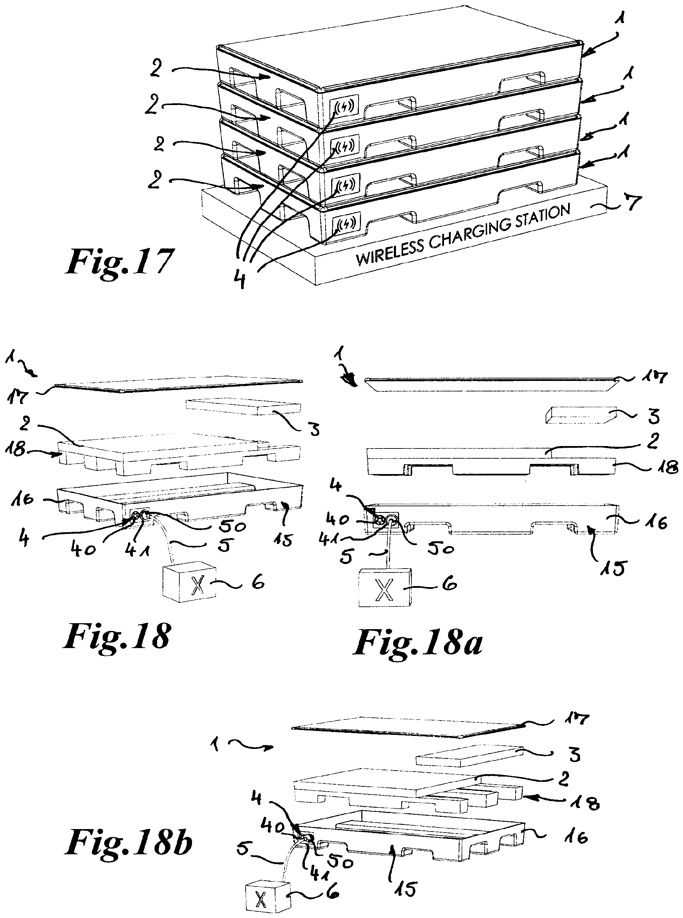

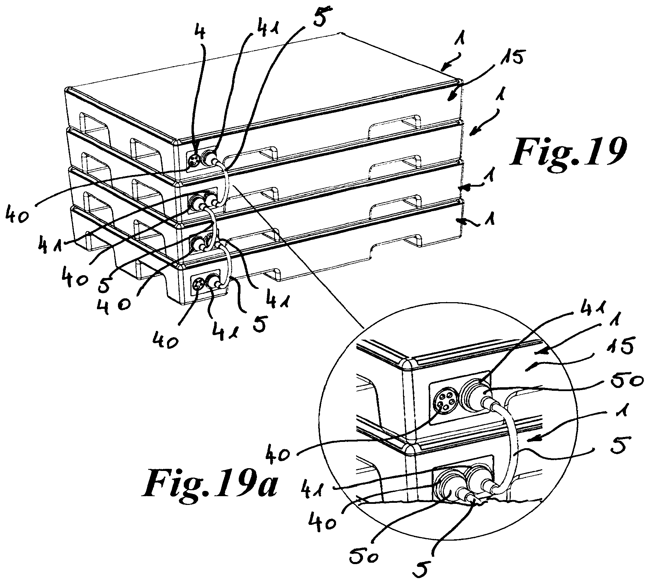

Wie insbesondere den Figuren 17 bis 19a entnommen werden kann, weist die jeweilige Transportpalette 1 zum Laden und zur Energieübertragung bezüglich des Energiespeichers 2 zumindest eine Energieübertragungseinrichtung 4 auf. Diese ist in der Ausgestaltung nach Figur 17 kabellos, z.B. induktiv, ausgebildet, während sie bei den Ausgestaltungen nach Figur 18, 18a und 18b sowie 19, 19a kabelgebunden durch Vorsehen einer jeweiligen Steckbuchse 40, 41 auf der jeweiligen Außenseite des Seitenteils 15 der Transportpalette 1 angeordnet sind. Selbstverständlich können Steckbuchsen 40, 41 auch oder zusätzlich an einer der anderen Seitenteile der Transportpalette 1 angeordnet werden. In die Steckbuchsen 40, 41 der Energieübertragungseinrichtung 4 können Kabel 5 mit Steckern 50 eingesteckt werden, die eine Verbindung beispielsweise zu einer Energiequelle bzw. Ladestation 6 ermöglichen. Ebenfalls können mehrere Transportpaletten 1 untereinander über solche Kabel 5, die in die jeweiligen Steckbuchsen 40, 41 der übereinander angeordneten Transportpaletten eingesteckt sind, verbunden werden. Dies ist beispielhaft in Figur 19, 19a gezeigt. Eine kabellose beispielsweise induktive Verbindung zu einer Ladestation 7 ist in Figur 17 beispielhaft gezeigt. Die aufeinandergestapelten Transportpaletten 1 können hierbei kabellos, beispielsweise induktiv, miteinander und mit der kabellosen Ladestation 7 verbunden werden, um die jeweiligen wiederaufladbaren Energiespeicher 2 in der jeweiligen Transportpalette 1 aufzuladen bzw. zunächst zu entladen und nachfolgend wieder aufzuladen.

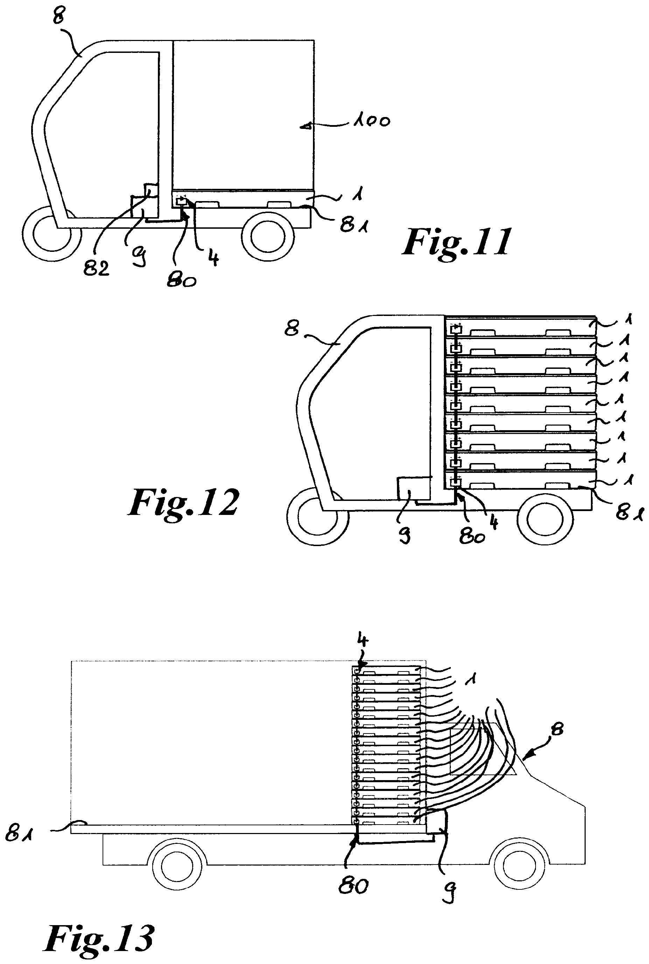

Über die jeweiligen Energieübertragungseinrichtungen 4 der Transportpaletten 1 können nicht nur die innerhalb der Transportpaletten angeordneten wiederaufladbaren Energiespeicher 2 geladen werden, sondern vielmehr auch deren Energie beispielsweise auf einen Elektroantrieb 9 eines Transportfahrzeugs 8 oder andere elektrische oder elektronische Komponenten von diesem übertragen werden, wie dies in den Figuren 11 bis 16 beispielhaft gezeigt ist. Wie insbesondere in Figur 11 zu sehen, wird über die Energieübertragungseinrichtung 4 der Transportpalette 1 diese bzw. der darin befindliche zumindest eine wiederaufladbare Energiespeicher 2 über eine Anschlusseinrichtung 80 des Transportfahrzeugs 8 an dieses elektrisch angeschlossen. Insbesondere wird hier auch eine mechanische Verbindung in diesen Bereich vorgesehen, um ein ungewolltes Verrutschen der Transportpalette 1 auf einer Transportfläche 81 des Transportfahrzeugs 8, auf der die Transportpalette 1 aufgestellt ist, insbesondere im Bereich der Anschlusseinrichtung 80 zu vermeiden. Die Anschlusseinrichtung 80 am Transportfahrzeug 8 ist z.B. mit dem Elektroantrieb 9 des Transportfahrzeugs 8 verbunden, um den Elektroantrieb über den wiederaufladbaren Energiespeicher 2 mit Energie zu versorgen. Bei einem Stapel von aufeinandergestapelten Transportpaletten 1, wie in den Figuren 12, 13, 14, 16 angedeutet, kann eine große Energiemenge für das Transportfahrzeug bzw. dessen Elektroantrieb zur Verfügung gestellt werden. Hierdurch kann die Reichweite des Fahrzeugs deutlich vergrößert werden. Andererseits können auch weitere mit Energie zu versorgende Einrichtungen des Transportfahrzeugs gespeist werden, wie beispielsweise eine Klimatisierungseinrichtung 82 zum Kühlen des Innenraums des Transportfahrzeugs.

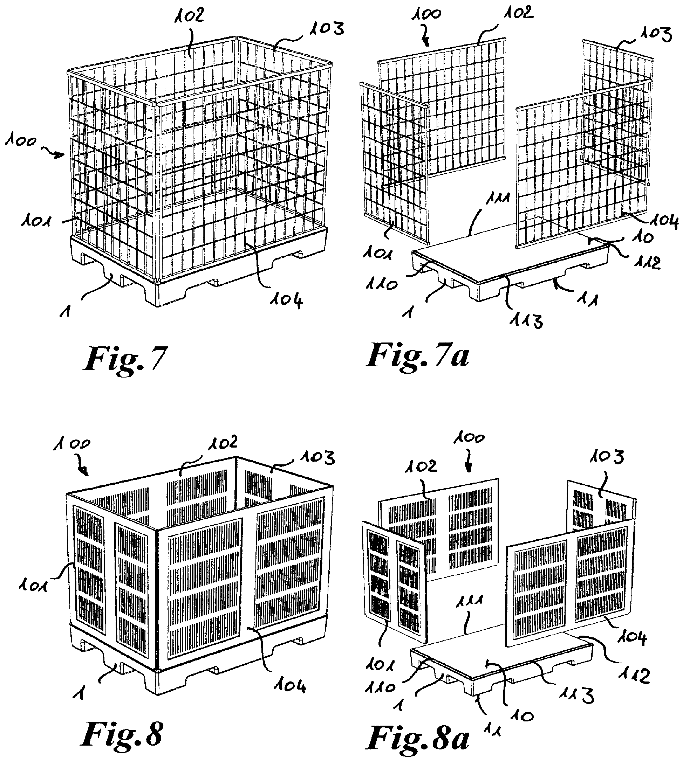

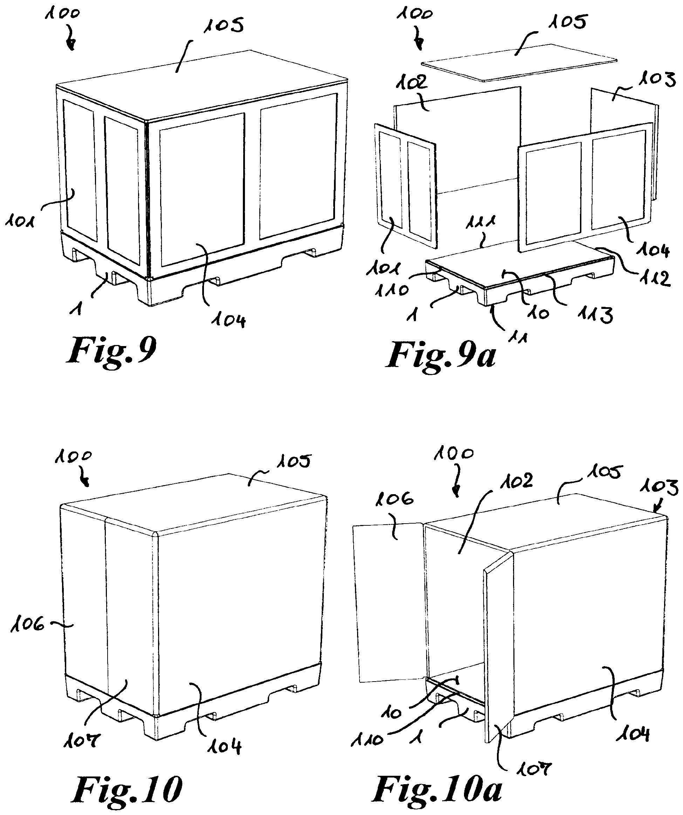

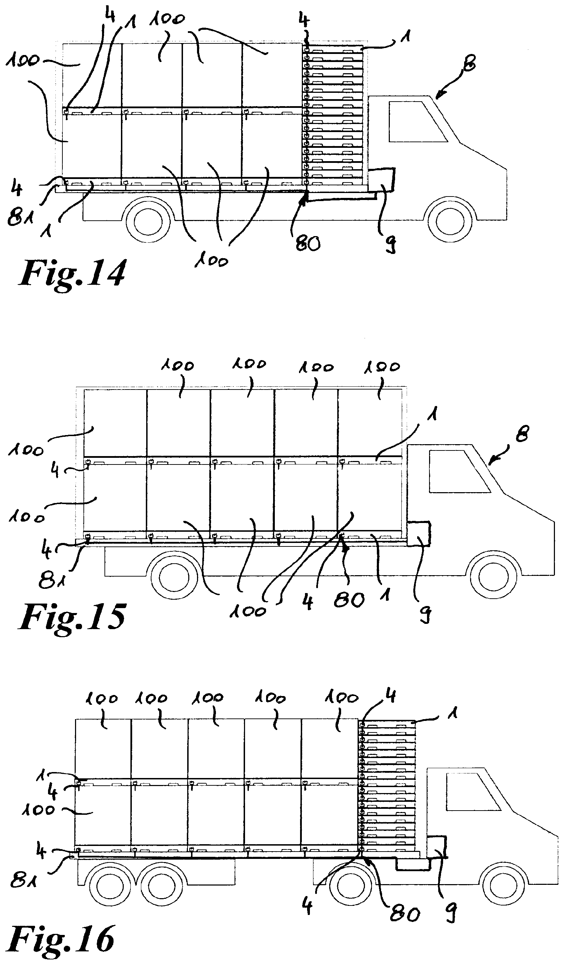

Neben dem Aufstapeln der Transportpaletten 1 können auch Transportbehälter 100, die die Transportpaletten 1 als Basis umfassen, aufeinandergestapelt werden, wie ebenfalls den Figuren 14 bis 16 zu entnehmen ist. Die Energieübertragungseinrichtungen 4 der jeweiligen Transportpaletten 1 können durch die Transportbehälter 100 bzw. deren Deckelteile 105, Wandungsteile 101, 102, 103, 104 und/oder türartigen Elemente 106 hindurch über integrierte Leitungen, separate Kabel oder auch kabellos miteinander verbunden werden. Bei dem Transportfahrzeug gemäß Figur 11 ist lediglich ein solcher Transportbehälter 100 auf dessen Transportfläche 81 aufgestellt. Ein solcher Transportbehälter 100 kann durch Auffügen von Wandungsteilen 101, 102, 103, 104 und ggf. zumindest einem Deckelteil 105 auf die die Basis des Transportbehälters 100 bildende Transportpalette gebildet werden, wie es beispielhaft in den Figuren 7 bis 10a gezeigt ist. Hierbei können die Wandungsteile 101, 102, 103, 104 gitterrostartig ausgebildet sein, um Transportboxen nach Art einer Gitterbox zu bilden, wie in den Figuren 7 und 7a gezeigt, oder mit schlitzförmigen Öffnungen versehene Wandungsteile 101, 102, 103, 104 umfassen, wie in den Figuren 8, 8a gezeigt, oder geschlossene Wandungsteile 101, 102, 103, 104 aufweisen, wie in den Figuren 9, 9a zu sehen. Dort ist das Deckelteil 105 zum oberen Verschließen des Transportbehälters 100 auf die Oberseite der Wandungsteile aufgefügt. Bei der in den Figuren 10, 10a gezeigten Ausführungsvariante des Transportbehälters sind anstelle des einen Wandungsteils zwei türartige Elemente 106, 107 vorgesehen, um ein Öffnen und Verschließen des Transportbehälters 100 zu ermöglichen. Die Wandungsteile 101, 102, 103, 104 bzw. türartigen Elemente 106, 107 können in Nuten 110, 111, 112, 113 auf der Oberseite 10 der Transportpalette 1 aufgestellt und dort befestigt, z.B. verrastet oder fest geklemmt werden.

Ein insbesondere mit türartigen Elementen 106, 107 versehener Transportbehälter 100 kann insbesondere auch als Kühlbehälter ausgebildet werden zur Aufnahme von Kühlgut, das darin gekühlt transportiert werden kann. Die zum Betreiben eines Kühlaggregats erforderliche elektrische Energie kann durch den zumindest einen wiederaufladbaren Energiespeicher 2 der Transportpalette 1 zur Verfügung gestellt werden, so dass der Kühlbehälter nicht nur unabhängig von der Stromversorgung des Transportfahrzeugs 8 ist, sondern sogar bei seiner Zwischenlagerung durch den wiederaufladbaren Energiespeicher der Transportpalette 1 des Transportbehälters 100 in Form des Kühlbehälters weiter mit Strom versorgt werden kann.

Die Transportpaletten 1 können problemlos aufeinandergestapelt werden, wobei dies bei gleich dimensionierten Transportpaletten 1 und bei unterschiedlich dimensionierten Transportpaletten 1 gleichermaßen möglich ist, wie den Figuren 5 und 6 zu entnehmen ist. Um ein Verrutschen der aufeinander gestapelten Transportpaletten 1 zu verhindern, können insbesondere auf der Oberseite 10, jedoch auch auf der Unterseite 11 der Transportpaletten 1 Vorsprünge, Rücksprünge oder anderweitige ein Verrutschen verhindernde Einrichtungen vorgesehen werden, z.B. auch, ggf. lediglich partiell vorgesehene Oberflächenrauigkeiten.

Wie Figur 1 noch weiter entnommen werden kann, ist die Transportpalette 1 mit einem auslesbaren Datenträger hier in Form eines RFID-Transponders 20 zum Speichern der Daten des wiederaufladbaren Energiespeichers 2, wie Alter, Ladezyklen, etc., versehen. Der RFID-Transponder 20 kann kabellos ausgelesen werden, so dass jederzeit der Zustand des wiederaufladbaren Energiespeichers 2 überprüft und dieser rechtzeitig gegen einen neuen ausgetauscht werden kann, wenn dies erforderlich erscheint. Der auslesbare Datenträger bzw. RFID-Transponder 20 kann im Innern der Transportpalette 1 angeordnet, in dessen Material integriert oder auch auf der Außenseite der Transportpalette 1 angeordnet werden. Anstelle eines RFID-Transponders kann auch eine andere Art eines auslesbaren Datenträgers verwendet werden, wie beispielsweise eine mobile oder fest eingebaute oder einbaubare SIM-Karte, wobei letztere insbesondere für eine Maschine-zu-Maschine-Kommunikation geeignet sein kann und insbesondere eine Übermittlung bzw. einen Austausch auch größerer Datenmengen ermöglicht.

Es können somit beliebige Kombinationen von Transportpaletten 1 und auf deren Basis erzeugten Transportbehältern 100 vorgesehen werden. Die für das Transportfahrzeug 8 zur Verfügung stehende Energiemenge kann durch die Anzahl der wiederaufladbaren Energiespeicher in den jeweiligen Transportpaletten 1 und somit auch durch die mitgeführten Transportpaletten 1 bzw. aus diesen gebildeten Transportbehälter 100 bestimmt wird.

Neben den im Vorstehenden beschriebenen und in den Figuren gezeigten Ausführungsvarianten von Transportpaletten, Transportbehältern und Transportfahrzeugen mit solchen können noch zahlreiche weitere gebildet werden, auch beliebige Kombinationen der vorstehend genannten Merkmale, wobei jeweils in Transportpalette zumindest ein wiederaufladbarer Energiespeicher angeordnet ist, der zum Energieversorgen zumindest eines Elektroantriebs oder einer elektrischen oder elektronischen Komponente des Transportfahrzeugs ausgebildet ist bzw. dient und wobei die Transportpalette mit zumindest einer Energieübertragungseinrichtung zum Übertragen von Energie von dem zumindest einen wiederaufladbaren Energiespeicher zu dem Elektroantrieb oder der zumindest einen elektrischen oder elektronischen Komponente des Transportfahrzeugs vorgesehen ist.

### Bezugszeichenliste

- 1: Transportpalette
- 2: wiederaufladbarer Energiespeicher
- 3: Ladeelektronikeinheit
- 4: Energieübertragungseinrichtung
- 5: Kabel
- 6: Energiequelle/Ladestation
- 7: kabellose Ladestation
- 8: Transportfahrzeug
- 9: Elektroantrieb
- 10: Oberseite
- 11: Unterseite
- 12: Seitenteil/Seitenfläche
- 13: Seitenteil/Seitenfläche
- 14: Seitenteil/Seitenfläche
- 15: Seitenteil/Seitenfläche
- 16: Gehäuseunterteil
- 17: Deckelteil
- 18: Trägerteil
- 19: Innerer Hohlraum von 16
- 20: RFID-Transponder/auslesbarer Datenträger
- 40: Steckbuchse
- 41: Steckbuchse
- 50: Stecker
- 80: Anschlusseinrichtung
- 81: Transportfläche
- 82: Klimatisierungseinrichtung
- 100: Transportbehälter
- 101: Wandungsteil
- 102: Wandungsteil
- 103: Wandungsteil
- 104: Wandungsteil
- 105: Deckelteil
- 106: türartiges Element
- 107: türartiges Element
- 110: Nut
- 111: Nut
- 112: Nut
- 113: Nut
- 160: Längsrippe
- 161: Längsrippe
- 162: Längsrippe
- 163: Quernut
- 164: Quernut
- 165: Quernut
- 166: Quernut
- 167: Quernut
- 168: Quernut
- 180: Trägerholm
- 181: Trägerholm
- 182: Trägerholm

## Patentansprüche

1. Transportpalette (1) mit Oberseite (10), Unterseite (11) und zumindest vier zwischen und/oder benachbart zu Oberseite (10) und Unterseite (11) angeordneten Seitenteilen (12,13,14,15) oder Seitenflächen,
wobei die Transportpalette (1) aus zumindest zwei Teilen modular aufgebaut ist und zumindest ein Unterteil und zumindest ein Oberteil umfasst und mit zumindest einem wiederaufladbaren Energiespeicher (2) versehbar oder versehen ist, wobei der zumindest eine wiederaufladbare Energiespeicher (2) zur Energieversorgung zumindest einer elektrischen oder elektronischen Komponente (9) eines Transportfahrzeugs (8) ausgebildet ist und im Innern von Oberteil und/oder Unterteil angeordnet wird, wobei zumindest eine Ladeelektronikeinheit (3) für den zumindest einen wiederaufladbaren Energiespeicher an der oder im Innern (19) der Transportpalette (1) angeordnet ist, und wobei die Transportpalette (1) zumindest eine Energieübertragungseinrichtung (4) zur Übertragung von Energie von dem zumindest einen wiederaufladbaren Energiespeicher (2) an die zumindest eine elektrische oder elektronische Komponente (9) des Transportfahrzeugs (8) und/oder von zumindest einer Energiequelle (6,7) an den wiederaufladbaren Energiespeicher (2) aufweist.

2. Transportpalette (1) nach Anspruch 1,
wobei die zumindest eine Energieübertragungseinrichtung (4) zur kabelgebundenen Energieübertragung ausgebildet ist, insbesondere zumindest eine Steckbuchse (40,41) zur Energieübertragung über ein darin einsteckbares Kabel (5) umfasst.

3. Transportpalette (1) nach Anspruch 1 oder 2, wobei die zumindest eine Energieübertragungseinrichtung (4) zur kabellosen Energieübertragung ausgebildet ist, insbesondere zur induktiven Energieübertragung.

4. Transportpalette (1) nach einem der vorstehenden Ansprüche,
wobei die modular aufgebaute Transportpalette (1) einen mit Hohlräumen versehenen Gehäuseunterteil (16), einen Deckelteil (17), der auf diesen aufgefügt wird und diesen nach außen verschließt, sowie einen in das Gehäuseunterteil (16) einfügbaren Trägerteil (18) aufweist, der den wiederaufladbaren Energiespeicher (2) und die Ladeelektronikeinheit (3) trägt.

5. Transportpalette (1) nach einem der vorstehenden Ansprüche,
wobei die im Innern (19) der Transportpalette (1) angeordneten Komponenten des Energiespeichers (2) und der Ladeelektronikeinheit (3) nach außen abgedichtet und gekapselt sind.

6. Transportpalette (1) nach einem der vorstehenden Ansprüche,
wobei die Transportpalette (1) aus zumindest einem Kunststoffmaterial besteht, insbesondere zumindest einem zumindest teilweise verstärkten Kunststoffmaterial.

7. Transportpalette (1) nach einem der vorstehenden Ansprüche,
wobei zumindest ein auslesbarer Datenträger (20) in und/oder an der Transportpalette (1) angeordnet ist, insbesondere zumindest ein RFID-Transponder (20), zum Speichern von Daten des zumindest einen wiederaufladbaren Energiespeichers (2) und/oder von eine Ortung und Identifikation des zumindest einen wiederaufladbaren Energiespeichers (2) und/oder der Transportpalette (1) ermöglichenden Daten.

8. Transportpalette (1) nach einem der vorstehenden Ansprüche,
wobei die Transportpalette (1) zumindest eine Einrichtung (110,111,112,113) zum Verbinden der Transportpalette (1) mit einem oder mehreren Wandungsteilen (101,102,103,104) und/oder türartigen Elementen (106,107) aufweist, insbesondere geschlossenen und/oder mit Öffnungen versehenen und/oder gitterartigen Wandungsteilen (101, 102, 103, 104) und/oder türartigen Elementen (106).

9. Transportpalette (1) nach Anspruch 8,
wobei zumindest vier Wandungsteile (101, 102, 103, 104) und/oder türartige Elemente (106,107) mit der Transportpalette (1) verbunden sind zum Ausbilden einer Box oder eines Transportbehälters (100), insbesondere Kühlbehälters.

10. Transportbehälter (100) zum Transport von Transportgut, umfassend eine Basis und eine Anzahl von Wandungsteilen (101, 102, 103, 104),
wobei als Basis zumindest eine Transportpalette (1) nach einem der vorstehenden Ansprüche vorgesehen ist, welche mit der Anzahl von Wandungsteilen (101, 102, 103, 104) und/oder türartigen Elementen (106,107) verbunden ist, wobei die Transportpalette (1) zumindest eine Einrichtung (110,111,112,113) zum Verbinden der Transportpalette (1) mit den Wandungsteilen (101,102,103,104) und/oder türartigen Elementen (106,107) aufweist.

11. Transportbehälter (100) nach Anspruch 10,
wobei der Transportbehälter (100) als allseitig geschlossener Behälter mit der zumindest einen Transportpalette (1) als Basis, seitlichen Wandungsteilen (101, 102, 103, 104) und/oder türartigen Elementen (106,107) und zumindest einem Deckelteil (105) ausgebildet ist, insbesondere als Kühlbehälter.

12. Transportfahrzeug (8) mit zumindest einer elektrischen oder elektronischen Komponente, wie zumindest einem Elektroantrieb (9), und mit zumindest einer Transportfläche (81), auf der zumindest eine Transportpalette (1) nach einem der vorstehenden Ansprüche 1-9 angeordnet ist, wobei das Transportfahrzeug (8) mit zumindest einer Anschluss- oder Verbindungseinrichtung (80) versehen ist zum Übertragen von Energie von dem zumindest einen wiederaufladbaren Energiespeicher (2) der Transportpalette (1) an zumindest eine elektrische oder elektronische Komponente (9) des Transportfahrzeugs.

13. Transportfahrzeug (8) nach Anspruch 12,
wobei die Transportpalette (1) als Box oder Transportbehälter (100), insbesondere Kühlbehälter, ausgebildet ist.

14. Transportfahrzeug (8) nach Anspruch 13, wobei der zumindest eine wiederaufladbare Energiespeicher (2) der Transportpalette (1) zur Energieversorgung für eine Kühleinrichtung zum Kühlen des Innenraums des Transportfahrzeugs (8) oder einer Klimatisierungseinrichtung (82) des Transportfahrzeugs (8) vorgesehen ist.

## Claims

1. Transport pallet (1) having an upper side (10), a lower side (11) and at least four side parts (12, 13, 14, 15) or side faces arranged between and/or adjacent to the upper side (10) and the lower side (11),
wherein the transport pallet (1) is composed in a modular manner of at least two parts and comprises at least one lower part and at least one upper part and is able to be provided or is provided with at least one rechargeable energy store (2), wherein the at least one rechargeable energy store (2) is configured to supply energy to at least one electrical or electronic component (9) of a transport vehicle (8) and is arranged in the interior of the upper part and/or the lower part, wherein at least one charging electronics unit (3) for the at least one rechargeable energy store is arranged on or in the interior (19) of the transport pallet (1), and wherein the transport pallet (1) has at least one energy transfer device (4) for transferring energy from the at least one rechargeable energy store (2) to the at least one electrical or electronic component (9) of the transport vehicle (8) and/or from at least one energy source (6, 7) to the rechargeable energy store (2).

2. Transport pallet (1) according to claim 1,
wherein the at least one energy transfer device (4) is configured for energy transfer by cable, in particular comprises at least one socket (40, 41) for energy transfer *via* a cable (5) which is able to be inserted into said socket.

3. Transport pallet (1) according to claim 1 or 2,
wherein the at least one energy transfer device (4) is configured for cable-free energy transfer, in particular for inductive energy transfer.

4. Transport pallet (1) according to any one of the preceding claims,
wherein the transport pallet (1) constructed in a modular manner has a housing lower part (16) provided with cavities, a cover part (17) which is attached thereto and closes it with respect to the outside, and a carrier part (18) which is able tobe introduced into the housing lower part (16) and which carries the rechargeable energy store (2) and the charging electronics unit (3).

5. Transport pallet (1) according to any one of the preceding claims,
wherein the components of the energy store (2) and the charging electronics unit (3) arranged in the interior (19) of the transport pallet (1) are sealed and encapsulated with respect to the outside.

6. Transport pallet (1) according to any one of the preceding claims,
wherein the transport pallet (1) consists of at least one plastics material, in particular at least one at least partially reinforced plastics material.

7. Transport pallet (1) according to any one of the preceding claims,
wherein at least one readable data carrier (20) is arranged in and/or on the transport pallet (1), in particular at least one RFID transponder (20), for storing data of the at least one rechargeable energy store (2) and or data allowing the at least one rechargeable energy store (2) and/or the transport pallet (1) to be located and identified.

8. Transport pallet (1) according to any one of the preceding claims,
wherein the transport pallet (1) has at least one device (110, 111, 112, 113) for connecting the transport pallet (1) to one or more wall parts (101, 102, 103, 104) and/or door-like elements (106, 107), in particular wall parts (101, 102, 103, 104) and/or door-like elements (106) that are closed and/or provided with openings and/or lattice-like.

9. Transport pallet (1) according to claim 8,
wherein at least four wall parts (101, 102, 103, 104) and/or door-like elements (106, 107) are connected to the transport pallet (1) to form a box or a transport container (100), in particular arefrigerated container.

10. Transport container (100) for transporting goods to be transported, comprising a base and a number of wall parts (101, 102, 103, 104),
wherein there is provided as the base at least one transport pallet (1) according to any one of the preceding claims, which transport pallet is connected to the number of wall parts (101, 102, 103, 104) and/or door-like elements (106, 107), wherein the transport pallet (1) has at least one device (110, 111, 112, 113) for connecting the transport pallet (1) to the wall parts (101, 102, 103, 104) and/or door-like elements (106, 107).

11. Transport container (100) according to claim 10,
wherein the transport container (100) is in the form of a container which is closed on all sides, having the at least one transport pallet (1) as the base, lateral wall parts (101, 102, 103, 104) and/or door-like elements (106, 107) and at least one cover part (105), in particular in the form of a refrigerated container.

12. Transport vehicle (8) having at least one electrical or electronic component, such as at least one electric drive (9), and having at least one transport surface (81) on which there is arranged at least one transport pallet (1) according any one of the preceding claims 1 to 9, wherein the transport vehicle (8) is provided with at least one terminal or connection device (80) for transferring energy from the at least one rechargeable energy store (2) of the transport pallet (1) to at least one electrical or electronic component (9) of the transport vehicle.

13. Transport vehicle (8) according to claim 12,
wherein the transport pallet (1) is in the form of a box or transport container (100), in particular a refrigerated container.

14. Transport vehicle (8) according to claim 13,
wherein the at least one rechargeable energy store (2) of the transport pallet (1) is provided for supplying energy for a cooling device for cooling the interior of the transport vehicle (8) or for an air conditioning device (82) of the transport vehicle (8).

## Revendications

1. Palette de transport (1) comprenant une partie haute (10), une partie basse (11) et au moins quatre parties latérales (12, 13, 14, 15) ou surfaces latérales disposées entre et/ou adjacentes aux parties haute (10) et basse (11), dans laquelle la palette de transport (1) est construite avec au moins deux modules et comprend au moins une partie inférieure et au moins une partie supérieure et comprend ou peut comprendre au moins un accumulateur d'énergie rechargeable (2), l'au moins un accumulateur d'énergie rechargeable (2) étant conçu pour fournir de l'énergie à au moins un composant électrique ou électronique (9) d'un véhicule de transport (8), et étant disposé à l'intérieur de la partie supérieure et/ou de la partie inférieure, dans laquelle au moins une unité électronique de charge (3) de l'au moins un accumulateur d'énergie rechargeable (2)est disposé sur ou à l'intérieur (19) de la palette de transport (1), et dans laquellela palette de transport (1) comprend au moins un dispositif de transfert d'énergie (4) pour transférer de l'énergie à partir de l'au moins un accumulateur d'énergie rechargeable (2) à l'au moins un composant électrique ou électronique (9) du véhicule de transport (8)et/ou d'au moins une source d'énergie (6,7) à l'accumulateur d'énergie rechargeable (2).

2. Palette de transport (1) selon la revendication 1, dans laquellele au moins un dispositif de transfert d'énergie (4) est conçu pour la transmission d'énergie filaire, et comprend en particulier au moins une prise (40, 41) pour la transmission d'énergie via un câble (5) pouvant y être inséré.

3. Palette de transport (1) selon la revendication 1 ou 2,dans laquelle le au moins un dispositif de transmission d'énergie (4) est conçu pour une transmission d'énergie sans fil, en particulier pour une transmission d'énergie par induction.

4. Palette de transport (1) selon l'une des revendications précédentes,dans laquellela palette de transport modulaire (1) comprend une partie inférieure (16) pourvue d'espaces creux, une partie de couvercle (17)disposée sur la partie inférieure, de sorte que qu'une partie de support (18) peut être insérée dans la partie inférieure pour supporter l'accumulateur d'énergie rechargeable (2) et l'unité électronique de charge (3).

5. Palette de transport (1) selon l'une des revendications précédentes,dans laquelleles composants de l'accumulateur d'énergie rechargeable (2) et de l'unité électronique de charge (3) sont scellés et encapsulés à l'intérieur (19) de la palette de transport.

6. Palette de transport (1) selon l'une des revendications précédentes,dans laquelle la palette de transport (1) est constituée d'au moins une matière plastique, en particulier d'au moins une matière plastique au moins partiellement renforcée.

7. Palette de transport (1) selon l'une des revendications précédentes,dans laquelle au moins un support de données lisible (20) peut être ou est disposé dans et/ou sur la palette de transport (1), en particulier au moins un transpondeur RFID (20), pour stocker les données de l'au moins une réserve d'énergie rechargeable (2) et/ou de localisation et d'identification de l'au moins un accumulateur d'énergie rechargeable (2) et/ou des données d'activation de la palette de transport (1).

8. Palette de transport (1) selon l'une des revendications précédentes,dans laquelle la palette de transport (1) comporte au moins un dispositif (110, 111, 112, 113) pour relier la palette de transport (1) à une ou plusieurs parties de paroi (101, 102, 103, 104) et/ou parties en forme de porte (106, 107), en particulier fermées et/ou pourvus d'ouvertures et/ou des parties de paroi en forme de grille (101, 102, 103, 104) et/ou parties en forme de porte (106).

9. Palette de transport (1) selon la revendication 8,dans laquelle au moins quatre parties de paroi (101, 102, 103, 104) et/ou des parties en forme de porte (106, 107) sont reliées à la palette de transport (1) pour former une caisse ou un conteneur de transport (100), en particulier un conteneur de refroidissement.

10. Conteneur de transport (100) pour transporter des marchandises à transporter, comprenant une base et une pluralité de parties de paroi (101, 102, 103, 104),dans laquelle au moins une palette de transport (1) selon l'une des revendications précédentes est prévue comme base, laquelle est reliée aux parties de paroi (101, 102, 103, 104)et/ou aux parties en forme de porte (106, 107), dans laquelle la palette de transport (1) comprend au moins un dispositif (110,111,112,113) pour connecter la palette de transport (1) avec une ou plusieurs parties de paroi (101, 102, 103,104) et/ou avec les éléments en forme de porte (106, 107).

11. Conteneur de transport (100) selon la revendication 10,dans lequel le conteneur de transport (100) est conçu comme un conteneur fermé sur tous les côtés avec la au moins une palette de transport (1) comme base, les parties de paroi latérale (101, 102, 103, 104) et/ou les éléments en forme de porte (106, 107) et au moins un couvercle (105), en particulier comme conteneur de refroidissement.

12. Véhicule de transport (8) avec au moins un composant électrique ou électronique, tel qu'au moins un moteur électrique (9), et avec au moins une surface de transport (81) pour disposer au moins une palette de transport (1) selon l'un des précédentes revendications 1 à 9, dans lequel le véhicule de transport (8) comprend au moins un dispositif de connexion ou de raccordement (80) fourni ou disponible pour la transmission d'énergie à partir de l'au moins un accumulateur d'énergie rechargeable (2) de la palette de transport (1) à l'au moins un composant électrique ou électronique (9) du véhicule de transport.

13. Véhicule de transport (8) selon la revendication 12, dans lequel la palette de transport (1) est conçue comme une caisse ou un conteneur de transport (100), en particulier un conteneur réfrigérant.

14. Véhicule de transport (8) selon la revendication 13, dans lequel le au moins un accumulateur d'énergie rechargeable (2) de la palette de transport (1) est prévu pour fournir de l'énergie à un dispositif de refroidissement pour refroidir l'intérieur du véhicule de transport (8) ou à un dispositif de climatisation (82) du véhicule de transport (8).
